Europäisches Patentamt

European Patent Office

Office européen des brevets

(11) Publication number: 0 678 663 A1

# EUROPEAN PATENT APPLICATION

(21) Application number: 94300091.9

(22) Date of filing: 06.01.94

(51) Int. Cl.⁶: F02M 25/022

(43) Date of publication of application:
25.10.95 Bulletin 95/43

(84) Designated Contracting States:
AT BE CH DE DK ES FR GB GR IE IT LI LU MC NL PT SE

(71) Applicant: IONIC FUEL TECHNOLOGY Ltd.
Unit 5,
West Mayne Industrial Park,
Bramston Way
Laindon,
Basildon,
Essex, SS13 6TP (GB)

(72) Inventor: Hurdelbrink, Wolfgang, Dr.-Ing.
Im Kirchweinberg 14
D-97980 Bad Mergentheim (DE)

Inventor: Garner, Anthony John Sidney
Southwinds,
96 Thorpe Hall Avenue
Thorpe Bay,
Essex SS1 3AS (DE)
Inventor: Wentworth, Fred A.,Jr.
RFD 4,
100 Brentwood Road
Exeter,
New Hampshire 03833 (US)

(74) Representative: Coxon, Philip
Eric Potter & Clarkson
St. Mary's Court
St. Mary's Gate
Nottingham NG1 1LE (GB)

(54) Ion vapour generating apparatus and method.

(57) Apparatus and method for generating negatively charged ion vapor are provided. According to a preferred embodiment of the method of one aspect of the present invention, a plurality of ion vapor generators (10A, 10B) (of the type that generate ion vapor from a quantity of water-including liquid) are selectively, alternatively activated and de-activated for predetermined active and inactive periods, respectively, sufficient to prevent the liquid in the generators from being depleted of ability to produce ion vapor. Particular utility is found in the area of improving the efficiency of fossil fuel combustion, although other utilities are also contemplated.

Fig. 3

EP 0 678 663 A1

Rank Xerox (UK) Business Services
(3. 10/3.0 9/3.3.4)

## BACKGROUND OF THE INVENTION

### Field of the Invention

The present invention relates generally to improvements in combustion processes, and more particularly to an improved apparatus and method for generating negatively charged ion-containing vapor for enhancing efficiency of fossil fuel combustion. However, other utilities are also contemplated by the present invention, including, for example, in health fields related to control of infectious air-borne contaminants, irritants to breathing, odors, and the like.

### Brief Description of the Prior Art

The presence of minor amounts of water vapor is known to have the catalytic effect of improving the efficiency of various combustion processes, as is described in Van Nostrand's Scientific Encyclopedia, 4th Edition FE, page 1501. For many years, and particularly in the last 20 years, bubbling and other types of vapor generators have been used effectively to improve the performance of internal combustion engines. It has been thought that negatively charged ion vapor, that is, ion vapor containing quantities of hydroxide ions, improves the efficiency of the combustion process. See, for example, L. Nelson, et al., "Augmentation of Gas-Phase Combustion By Bubbling Combustion Air Through Water," Hydrocarbon Technology Environment, Vol. 6, Ann Arbor Science Publishers, 1982, pp. 273-289; Wanka, "Langzeitversuch mit einem Vapormid - Ionengenerator bei der Bitburger Brauerei Th. Simon GmbH (Long-Term Tests on a Vapormid™ Ion Generator at the Bitburger Brewery Th. Simon GmbH)," Brauwelt, Nr. 47/48, 1989; Brand, et al., "Brennstoffeinsparung an einem Lepolofen durch Ionisierung der Primarluft mit dem Vapormid - Verfahren (Fuel Savings in a Lepol Kiln by Ionizing the Primary Air Using the Vapormid™ Process)," Zement-Kalk-Gips, Nr. 9, 1990; and, Building Services Research and Information Association Report 11390/1, November 1993, compiled by Dr. A. Teckaram. See also U.S. Patent Nos. 3,862,819, 4,016,837, 4,410,467, and 4,952,340, 5,211,890, 5,246,632 and 5,255,514.

In all of the arrangements described in the foregoing publications, the exact mechanisms by which ion vapor enhances combustion efficiency has never been fully understood, nor is it completely understood now. It is believed, however (see e.g., Gardiner, "The Chemistry of Flames," Scientific American, February 1992, pp. 110-124), that the dominant chain branching reaction of combustion may be expressed as

$$H + O_2 \longrightarrow O + OH^-.$$

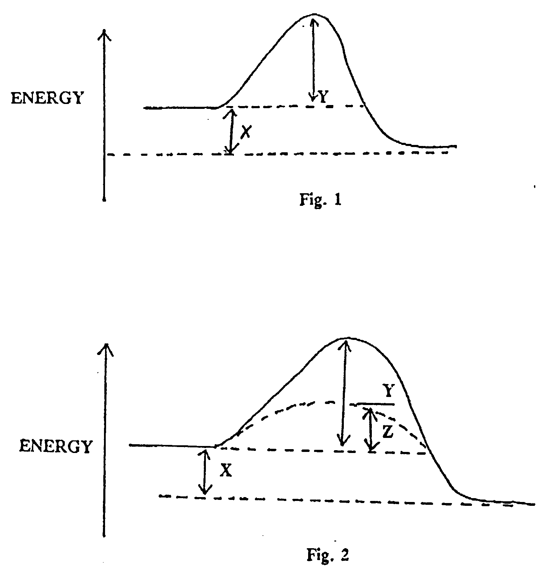

The atomic oxygen itself is needed for other chain branching reactions. Indeed, without the total reaction above, there is no combustion. Graphically, the reaction is depicted in Figure 1 wherein the chemical reaction of energy is represented by X, and the activation energy is represented by Y. The activation energy required to begin the combustion reaction is quite high (73.3 kJ/mol). Normally, this energy is supplied by the flame, spark, or other energy source, used to initiate or continue combustion.

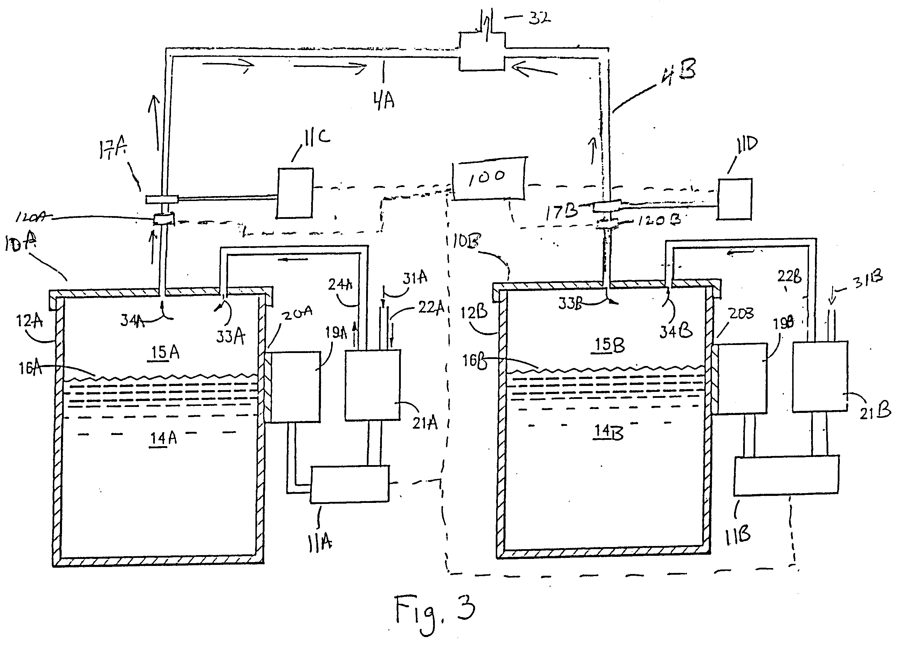

We have discovered that the predominant contribution to enhancing combustion efficiency may come, not from a negatively charged hydroxide ion ($OH^-$) but rather from negatively charged oxygen molecules, i.e. $O_2^-$. We have found that the inclusion of negatively charged oxygen molecules in a combustion reaction reduces the activation energy required to begin and/or continue combustion by the amount of potential energy of the ionic species. For example, the ionic species $O_2^-$ carries a potential energy of 42 kJ/mol which is released during combustion. The release of this potential energy reduces the activation energy required for combustion by the amount of potential energy released. Thus, the actual activation energy required for combustion is reduced to only 31.3 kJ/mol (that is, (73.3 - 42) kJ/mol). Graphically, the combustion reaction can now be depicted as Figure 2 in which Z is the potential energy of the ionic species $O_2^-$. Stated another way, by "pre-charging" the oxygen molecule prior to combustion by converting it to a negative ionic species, the activation energy barrier is reduced as the potential energy of the "pre-charged oxygen" molecules released.

This reduction of required combustion activation energy is thought to increase the efficiency of the combustion process by enabling combustion to occur at a much faster pace, result in improved flame stability, and permit actual combustion with excess air close to stoichiometry. Greater combustion efficiency results in decreased production of polluting by-products, such as nitric oxide, carbon dioxide, and carbon monoxide, as well as decreased fuel consumption per uniform combustion heat output.

Examples of ion vapor generators usable to enhance fossil fuel combustion efficiency are described in U.S. Patents Nos. 3,862,819, 4,016,837, 4,410,467, and 4,952,340, 5,211,890, 5,246,632 and 5,255,514, which are incorporated herein by reference. All of the generators described these patents produce negative ion vapor from a quantity of water-including liquid contained within the generator. However, the quantity of negative ions produced by negative ion generators such as described in the foregoing patents decreases after long periods of continuous ion vapor generation from the same quantity of water. And, under conditions of extremely prolonged use, production of negatively charged ions may fall off significantly.

It has been found that if the water-including liquid within the generator is replaced with "fresh" liquid, or if the generator is periodically de-activated so that the liquid used to generate ion vapor is permitted to "rest", the quantity of negative ions produced (when the generator is re-activated) returns to normal levels.

The exact technical and scientific reasons for these phenomena are not entirely understood. It is thought, however, that after long periods of negative ion generation, the liquid used in such generation begins to take on a net positive charge due to loss of negatively charged ions. This net positive charge of the liquid interferes with negative ion generation. However, if the generator is de-activated for a period of time, and the liquid allowed to rest, the net positive charge imparted to the liquid "bleeds off" to the ambient environment, and the liquid returns to its natural state of ionic balance suitable for resumed generation of negative ions.

This problem is not appreciated in the prior art and no apparatus or method is provided therein to alleviate this problem.

Objects of the Invention

It is therefore a general object of the present invention to provide an apparatus and method for generating negative ion vapor from water-containing liquid that overcomes the aforesaid and other disadvantages of the prior art. A more specific object of the present invention is to provide an improved apparatus and method for generating negative ion vapor, e.g. for use in enhancing combustion efficiency.

Summary of the Invention

Accordingly, in broad concept, an apparatus made according to this aspect of the present invention comprises at least one negative ion vapor generator for generating negatively charged ion vapor from water-including liquid. Means are provided for activating and de-activating the at least one generator whereby to permit the liquid to "rest", periodically, between periods of active generation.

In a preferred embodiment, the present invention comprises a plurality of negative ion vapor generators for generating negatively charged ion vapor from water-including liquid, and having their respective outlets connected to a common manifold, e.g. for delivery to a combustion process. Means are provided for selectively activating and de-activating the individual generators whereby to permit the liquid in the individual generators to "rest", periodically, between periods of active generation. Preferably the means for selectively activating and de-activating are arranged so that at least one generator is running and producing negative ion vapor at desired levels at all times.

According to a second aspect of the present invention, at least two negative ion vapor generators are connected together whereby the negative ion vapor output from the first generator is delivered to the headspace region of a second negative ion vapor generator. Cascading negative ion vapor generators in this manner results in the generation of a multiple of the amount of negative ions, as compared to the amount that could be produced by the sum of the generators separately. For example, connecting two like size generators together results in the production of, not twice, but approximately four times the amount of negative ions.

For further understanding of the present invention, reference should be had to the following detailed description taken in conjunction with the accompanying drawings wherein like numerals depict like parts, and in which:

Brief Description of the Drawings

Figures 1 and 2 depict graphically combustion reaction energy equations.
Figure 3 is a side cross-sectional view of one embodiment of an apparatus made according to the first aspect of the instant invention;
Figure 4 is a side cross-sectional view of a second embodiment of an apparatus made according to the second aspect of the instant invention;
Figure 5 illustrates the connection of an apparatus made according to the instant invention with a conventional oil fueled burner;

Figure 6 illustrates the connection of an apparatus made according to the instant invention with a gas-fueled burner;

Figure 7 illustrates the connection of an apparatus made according to the instant invention with an internal combustion engine;

Figure 8 is a graph plotting generator output over time;

Figure 9 is an output measurement and feedback control in accordance with another and preferred embodiment of the present invention; and

Figure 10 is a graph plotting generator output over time of a preferred embodiment of the present invention, employing the output measurement, feedback and control of Figure 9.

While the present invention will hereinafter be described in connection with preferred embodiments and methods of use, it will be understood by those skilled in the art that it is not intended to limit the invention to these embodiments. On the contrary, it is intended to cover all such alternative, modifications, and equivalents as may be included within the spirit and broad scope of the invention as defined only by the appended claims.

Description of the Preferred Embodiments

Figure 3 illustrates one preferred embodiment of an apparatus according to the first aspect of the present invention. The apparatus comprises at least one 10A conventional negative ion vapor generator, and preferably a plurality 10A, 10B of conventional negative ion vapor generators for generating vapor containing negatively charged ions ($OH^-$ and $O_2^-$) from a water-containing liquid. It will be appreciated that although the negative ion vapor generators 10A, 10B shown in Figure 3 are of the vibratory-type described in U.S. Patent No. 4,952,340, other types of negative ion vapor generators may be used in an apparatus according to the first aspect of the present invention, without departing therefrom. Generators 10A, 10B may be of essentially identical size and capacity, or may be of different size and capacity. Generators 10A, 10B respectively comprise liquid containers 12A, 12B partially filled with a liquid 14A, 14B which contains water. Vibration means 19A, 19B, respectively coupled to containers 12A, 12B by conventional coupling means 20A, 20B, cause the surfaces 16A, 16B of liquid 14A, 14B to be agitated with a resulting rippling effect. The vibratory levels, frequency and amplitude, are adjusted so as to maintain substantially continuous surface tension on liquid surfaces 16A, 16B, as described in the aforesaid '340 patent. This agitation causes negative ions to be released from liquid 14A, 14B and out through surfaces 16A, 16B. Elevated levels of surface agitation that lead to substantial disruption of the surface tension will (1) significantly limit the effective generation of negative ions and/or (2) cause undesired levels of positive ions to be generated in place of negative ions, defeating the purpose of the negative ion generator. At the top of containers 12A, 12B are respective head-spaces 15A, 15B where the negative ion vapor accumulates after liberation from the liquid 14A, 14B of generators 10A, 10B.

In the Figure 3 embodiment, ambient air 31A is drawn into air pump 21A via air inlet 22A. The air is then pumped from pump 21A through opening 33A into head-space 15A of generator 10A via conduit 24A. The positive pressure of ambient air thus provided to head-space 15A causes ion vapor generated therein to be driven from head-space 15A of container 12A through outlet 34A and into conduit 4A for delivery to a desired location 32, which preferably comprises a combustion process such as an engine or burner (not shown). Similarly, ambient air 32B is drawn into air pump 21B via air inlet 22B, and is pumped from pump 21B through opening 33B into head-space 15B of generator 10B via conduit 24B. As before, the positive pressure of ambient air thus provided to head-space 15B causes ion vapor generated therein to be driven from head-space 15B of container 12B through outlet 34B and into conduit 4B for delivery to location 32.

According to this first aspect of the present invention, means 11A, 11B are provided for selectively activating and de-activating generators 10A and 10B, in turn, for predetermined active and inactive periods, respectively, so as to permit the liquid 14A and 14B to "rest" for a period of time, thereby to avoid "overusing" the liquid which will result in a reduction in the rate of generation of negatively charged ion vapor. Resting the liquid for a period of time permits the liquid to "autoregenerate" itself to a balanced state, comparable to that at start-up, for favoring production of negative ion vapor. Preferrably, means 11A and 11B comprise conventional timer-switches or counters coupled to generators 10A and 10B, respectively, to switch the respective generator "on" and "off" in repetitive, predetermined active and inactive periods of time. Timer-switches 11A and 11B may be electrically coupled to pump 21A and vibrator 19A, and to pump 21B and vibrator 19B, respectively, to activate and de-activate them simultaneously, so as to cycle generators 10A and 10B, respectively, through periods of activity and inactivity, respectively.

The periods of the on and off cycles depend on various factors including the size of the ion generator and quantity of liquid therein.

Switches 11A, 11B preferably are programmable and permit their respective generators 10A and 10B to be activated and de-activated alternatively, that is, generators 10A and 10B are cycled "on" and "off", in timed sequence so that at least one generator is producing ion vapor at any given time, according to a predetermined timing sequence. Advantageously, the alternate cycling of generators 10A, 10B permits ion vapor to be continuously and efficiently produced and supplied to combustion space 32, while permitting the water 14A, 14B in the inactive generator to rest for sufficient time to autoregenerate to a balanced state favoring production of negative ion vapor. The "rest" period, of course, should be no longer than, and preferably will be somewhat shorter than the activating period so that the newly started generator may come-up essentially to full charge so that there is no "dead" period in which little or no negative ion vapor is being produced.

Also, if desired, timer-switches 11C, 11D controlled valves 17A, 17B, may be disposed in conduits 4A, 4B. Preferably, each timer-switch 11C, 11D is programmed to synchronize opening and closing of its respective valve 17A, 17B, as needed, to prevent flow of ion vapor from an active generator to an inactive generator and thus permit substantially all of the ion vapor generated by the active generator to be delivered to the combustion space 32. For example, if generator 10A is active and generator 10B is inactive, valve 17A should be opened and valve 17B closed. Of course, the placement of valves 17A, 17B shown in Figure 3, is merely for illustrative purposes and valves 17A, 17B may be disposed elsewhere in conduits 4A, 4B.

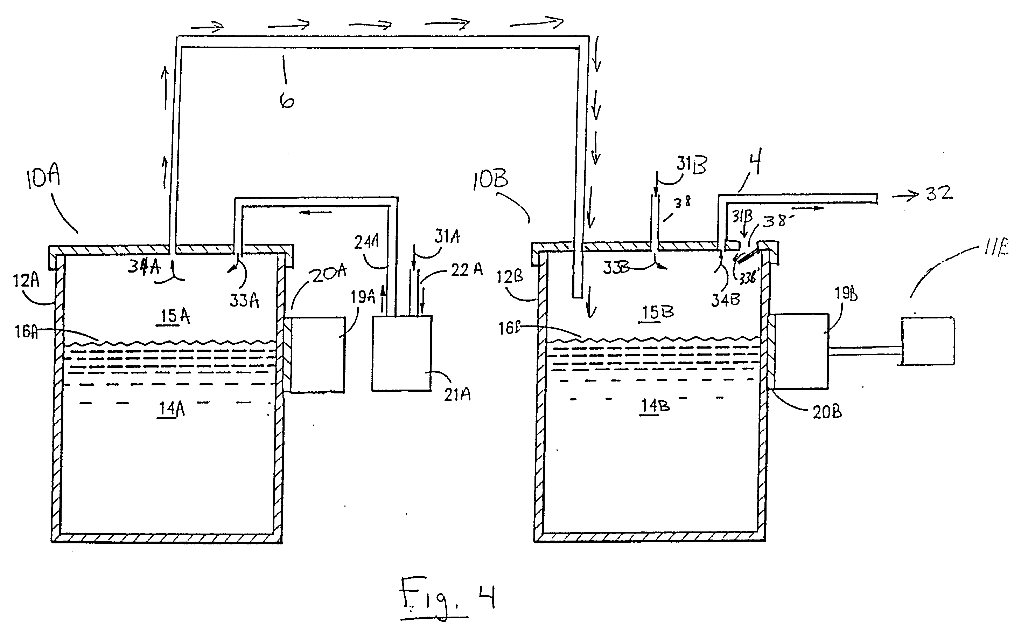

Turning now to Figure 4, in which there is shown another embodiment of apparatus made according to the present invention, here the apparatus comprises at least two ion generators 10A, 10B of the vibratory type, i.e. as described in aforesaid '340 patent. Of course, other types of ion-vapor generators, e.g. bubble type generators, may be used. Air pump 21A draws ambient air 31A through conduit 22A and pumps the air into head-space 15A via inlet 33A through conduit 24A. Positive pressure in head-space 15A forces ion vapor generated in the head-space 15A of generator 10A through conduit 6 to the head-space 15B of generators 10B. Preferably, conduit 6 is made of metal or plastic and connects inlet 34A of generator 10A to the head-space 15B of generator 10B. Alternatively, a conventional air pump (not shown) may be operatively disposed in conduit 6 to force ion vapor generated in head-space 15A through the conduit to the head-space 15B of generator 10B.

It has been discovered that introducing, i.e. cascading, the negative ion vapor generated by a first generator 10A to a second generator 10B substantially and disproportionately increases the production of the ion concentration in the vapor that can be withdrawn from the second generator 10B. By way of example, and using two generators which are essentially identical to one another in size and production capacity, the concentration of negative ions in the vapor produced when the second generator 10B is fed overhead from the first generator 10A is essentially four times the amount produced by generator 10A (or generator 10B), alone.

As before, the negative ion vapor generated by the generator apparatus may be withdrawn via conduit 4 and delivered to a desired location 32, such as a fossil fuel combustion space, driven from generator 10B by positive air pressure supplied by air pump 21A and/or an optional air pump (not shown) which may be operatively disposed in conduit 4 or conduit 6. Alternatively, vacuum suction or draw from combustion space 32 may be used to move the negative ion vapor.

Preferably, generator 10B also may comprise air pressure equalization means 38 for drawing ambient air 31B into the head-space 15B of generator 10B. Equalization means 38 includes inlets 33B, 33B' in container 12B. Optionally, either one 33B' or both 33B, 33B' of the inlets may include one-way flow valve or stopper 38'. Equalization means 38 permits the pressure of head-space 15B to be equalized with respect to the ambient environment, despite suction from combustion space 32.

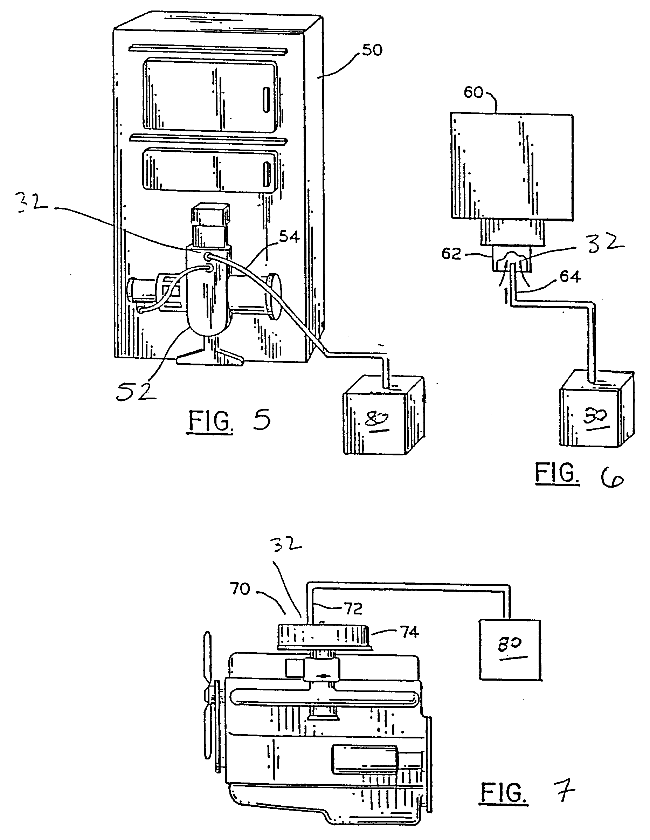

Figures 5-7 illustrate preferred ways of applying a negative ion vapor generating system of the present invention to various conventional fossil fuel combustion devices to increase the respective combustion efficiencies thereof. Referring to Figure 5, negative ion vapor generated by a negative ion vapor generating system 80 such as described in Figure 3 or Figure 4 is delivered through feed line 54 to the desired location 32, which in this case, is a combustion region 52 of the burner 50, which may be fueled, for example by oil.

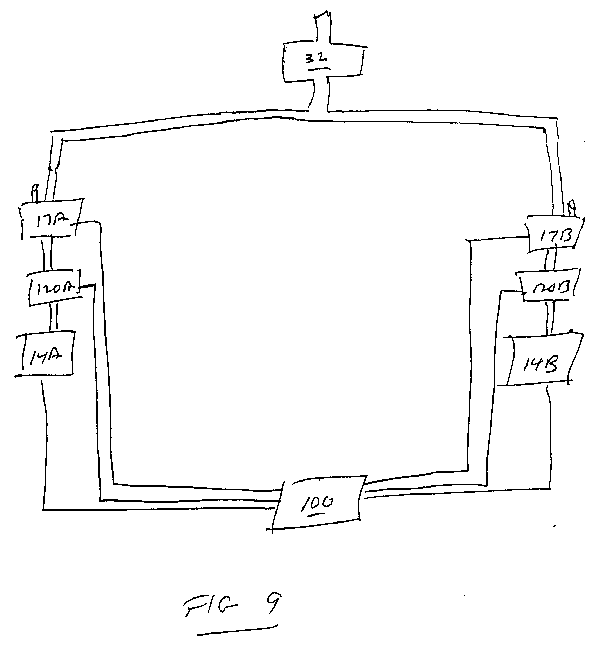

Application of the negative ion vapor generating system 80 to a gas-fired burner 60 is shown in Figure 6. Here the negative ion vapor generated by generating system 80 is feed via line 64 to the desired location 32, which in this case is the combustion region 62 of the gas burner 60.

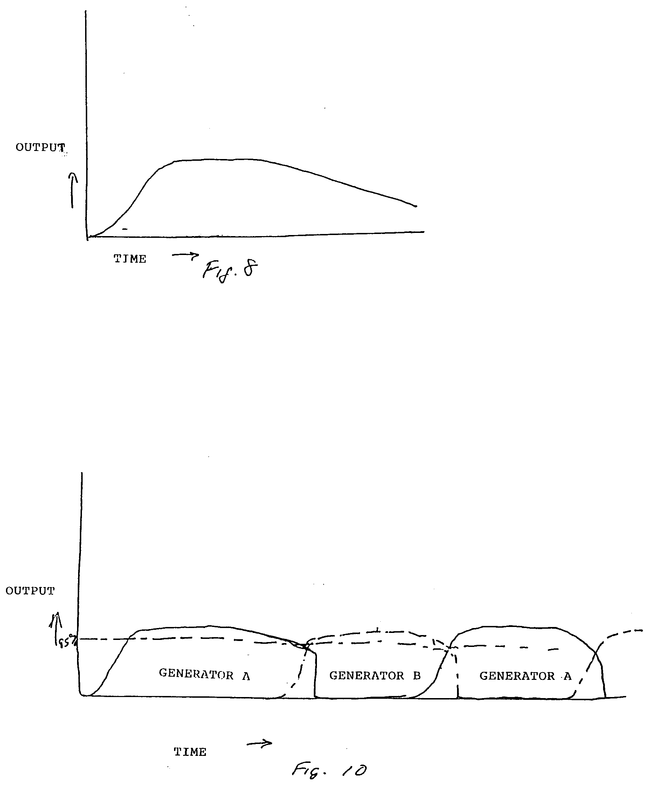

The application of a negative ion vapor generating system 80 to an internal combustion engine 70 is shown in Figure 7. Negative ion vapor generated by generating system 80 is delivered to the air intake 74 of engine 70 via feed line 72, and enters the engine 70 along with normal intake air. The engine 70 may be of the type fueled with gasoline, diesel oil, liquefied natural gas, propane, butane, and/or the like.

Further understanding of the present invention may be had by reference to the following examples.

EXAMPLE I

The container of a vibratory ion vapor generator of the type described in U.S. Patent No. 4,952,340 was partially (75%) filled with a volume of deionized water. When placed in the container, the water had a surface area of 413 sq. cm. Ambient humidity was 62%. A magnetic vibrator (which was set for 60 Hz) was used to impart vibratory energy to the wall of the container, which in turn generated vibrations in the water. The vibrator was attached to a timer-switch which was set to cycle the generator "on" and "off" for periods of 1/2 hour and 1/2 hours, respectively, over a total time of 200 hours. A constant quantity of 3500 cc. per minute of negative ion-laded vapor was withdrawn from the generator during the "on" periods, the negative ion content of the vapor output was measured using a Keithley Model 610C electrometer, and the result plotted over time as line (a) in Figure 8. For comparison purposes, an identical vibratory ion generator was continuously run, and the negative ion content of the vapor output was measured, as before, and the result plotted as line (b) in Figure 8.

EXAMPLES II-XI

The procedure of Example 1 was followed, but with the periods of "on" and "off" cycles varied from 10:1 to 1:1. Negative ion production was measured as before using an electrometer, and the results recorded in Table 1.

## TABLE 1

| EXAMPLE NO. VALUE | ON:OFF CYCLE | ELECTROMETER OUTPUT |
|---|---|---|
| 2 | 10:1 | $10^{-9}$ |
| 3 | 9:1 | $10^{-9}$ |
| 4 | 8:1 | $10^{-9} \times 2$ |
| 5 | 7:1 | $10^{-9} \times 2$ |
| 6 | 6:1 | $10^{-9} \times 2$ |
| 7 | 5:1 | $10^{-9} \times 3$ |
| 8 | 4:1 | $10^{-9} \times 3$ |
| 9 | 3:1 | $10^{-9} \times 4$ |
| 10 | 2:1 | $10^{-9} \times 4$ |
| 11 | 1:1 | $10^{-9} \times 4$ |

As can be seen from Table 1, permitting the water to rest for less than about 25 percent of the run time does not permit full autoregeneration of the water. However, permitting the water to rest for about 33 1/3 percent of the run time permits essentially complete autoregeneration, and little additional effect is seen in permitting the water to rest for more than about 33 1/3 percent of the run time.

It is, therefore, evident that there has been provided, in accordance with the present invention a method and apparatus for generating negatively charged ion vapor, that fully satisfies both the aims and objects hereinbefore set forth. While this invention has been described in conjunction with specific embodiments thereof, various modifications will be possible. For example, although the means 11A, 11B in Figure 3 are shown as separate and distinct, they may comprise separate controllable switches connected to a unitary, central programmable controller. Likewise, means 11C, 11D may also comprise controllable switches connected to a unitary, central controller, and indeed, means 11A, 11B, 11C, and/or 11D may all comprise switches controlled by a unitary, central programmable controller. Also, if desired, generators 10A and 10B may share a common air pump 21A.

6

Other modifications, also may be possible. For example, in the case of certain installations, it may be desired to feed a substantially constant amount of negative ions at all times to the combustion process so as not to upset combustion parameters. This could be accomplished by real time sampling of the negative ion content of the outputs from generators 14A and 14B of Figure 3, and employing the output measurements in feedback to control activation and de-activation of generators 14A and 14B, respectively. Referring to Figure 9, such a feedback process is as follows:

Generator 14A is turned on and run for a sufficient time to reach essentially steady state operation as determined by electrometer readings taken at 120A. Valve 17A is adjusted to permit slightly less than 100% of the negative ions vapor, for example, 95% to pass to combustion space 32. The balance may be bled off at valve 17A. Electrometer readings are maintained on real time, and when negative ion production begins to fall from generator 14A, e.g. to 97%, valve 17A is opened further to compensate for the falling production, and generator 14B is cycled on. However, all of the output from generator 14B is diverted by valve 17B until such time as generator 14B is running at full production. Once the output from generator 14A drops to approximately 95%, valve 17A is closed, and generator 14A is switched off and allowed to rest. Simultaneously with closing of valve 17A, valve 17B is opened and adjusted to permit 95% of the output of generator 14B to flow to combustion space 32. Generator 14B is then run continuously until its output, as sensed by electrometer 120B falls to about 97%, at which time valve 17B is opened to further compensate for falling production, and generator 14A is reactivated. Once generator 14A reaches full production and the output from generator 14B drops to 95%, valve 14B is closed simultaneously with the opening of valve 17A whereby to permit 95% of the output from generator 14A to pass therethrough, and generator 14B is deactivated to rest. The entire operation is controlled through a suitable feedback loop (Figure 9). The result is plotted in Figure 10.

In yet another embodiment of the invention, generators 14A and 14B are simply cycled on and off according to predetermined cycle, the control of which is affected by computer generated program stored in CPU 100. Cycle times may be determined by emperically measuring output of negatively charged ions from the generators, and adjusting run and rest times to provide a desired steady state production level.

Still other changes may be possible. For example, while the invention has been described in the preferred embodiment employing vibratory negative ion generators, the invention also advantageously may be employed using one or more bubble type generators or circulatory generators. And, in order to obtain fasten turn-around times, the liquid in the resting generator may be drained, and replaced with fresh liquid.

Thus, the invention is intended to embrace all of these and other alternatives, modifications, and variations, as fall within the spirit and broad scope of the hereinafter appended claims.

## Claims

1. Apparatus for producing negatively charged ion vapor, characterized by comprising, in combination:
   a. at least one ion vapor generator (10A) for generating ion vapor from a water-including liquid; and
   b. means (100) for selectively activating and de-activating said at least one generator for predetermined active and inactive periods, respectively, sufficient to prevent the liquid from being depleted of ability to produce said ion vapor.

2. Apparatus according to claim 1, characterized in that said selective activation and de-activation means comprises programmable switch means (11A, 11B) for activating and de-activating said at least one generator according to a stored program (100), and wherein said program preferably permits said at least one generator to be repetitively cycled through said active and inactive periods.

3. Apparatus according to claim 1, characterized by one or more of the following features:
   (a) said at least one generator comprises a plurality of generators (10A, 10B);
   (b) said apparatus further comprises means (4A, 4B) for delivering said ion vapor to a desired location (32), said delivering means including means (17A, 17B) for preventing flow of ion vapor from an activated generator to a de-activated generator, wherein said flow preventing means preferably comprises at least one controllable valve (17A, 17B), and wherein said at least one controllable valve preferably comprises programmable switch means (11C, 11D) for opening and closing said valve according to a stored program;
   (c) said selective activation and de-activation means comprises another programmable switch means for activating and de-activating said generators according to another respective stored program (100); and

(d) said at least one generator comprises at least one bubbling-type ion vapor generator or at least one vibratory-type ion vapor generator.

4. Apparatus for continuously producing negatively charged ion vapor over an extended period of time, characterized by comprising, in combination:

(a) a plurality of ion vapor generators (10A, 10B) for generating said ion vapor from a water-including liquid;

(b) means for selectively, alternatively, activating and de-activating said generators for predetermined active and inactive periods, respectively, sufficient to prevent the liquid from being depleted of ability to produce said ion vapor, said activating and de-activating means including programmable switch means (11A, 11B) for activating and de-activating said generators according to a stored program (100); and

(c) means for delivering ion vapor generated by said generators to a desired location (32), said withdrawing means including conduit means (4A, 4B) connecting said generators to said desired location, and also including means (17A, 17B) for preventing flow of ion vapor from an activated generator to a de-activated generator.

5. Apparatus according to claim 4, characterized by one or more of the following features:

(a) said program (100) permits said generators to be repetitively cycled through said active and inactive periods;

(b) said flow preventing means comprises at least one controllable valve (17A, 17B);

(c) said at least one controllable valve comprises a second programmable switch means (11C, 11D) for opening and closing said valve according to a second stored program which opens said valve during said active periods and closes said valve during inactive periods;

(d) said desired location (32) comprises a combustion space (50, 60, 70); and

(e) said plurality of generators comprises at least one bubbling-type ion vapor generator, or at least one vibratory-type ion vapor generator.

6. In a method for producing negatively charged ion vapor using at least one ion vapor generator for generating said ion vapor from a water-including liquid, the improvement characterized by, selectively, alternatively activating and de-activating said at least one generator for predetermined active and inactive periods, respectively, sufficient to prevent said liquid from being depleted of ability to produce said ion vapor.

7. In a method according to claim 6, characterized by one or more of the following features:

(a) the ion vapor produced by said at least one generator contains hydroxide ions;

(b) the ion vapor produced by said at least one generator contains negatively charged molecular oxygen;

(c) said at least one generator comprises at least one bubbling-type ion vapor generator; and

(d) said at least one generator comprises at least one vibratory-type ion vapor generator.

8. Apparatus for producing an increased quantity of negatively charged ion vapor, characterized by comprising, in combination:

(a) at least two ion vapor generators (10A, 10B) for generating ion vapor from a water-including liquid;

(b) means (6) for withdrawing ion vapor generated by one of said two generators (10A) and delivering the ion vapor to a head-space region (15B) of the other (10B) of said at least two ion vapor generators; and

(c) means (4) for delivering ion vapor generated by said other ion vapor generator to a desired location (32).

9. Apparatus according to claim 8, characterized by one or more of the following features:

(a) said other ion vapor generator (10B) includes pressure equalization means (38, 38') preferably for equalizing pressures of said head-space region (15B) and an ambient environment, said equalization means (38, 38') includes means for drawing sufficient ambient air into said head-space region to prevent a vacuum from forming in said head-space sufficient to interfere with production of ion vapor;

(b) said desired location (32) is a combustion space (50, 60, 70);

(c) at least one of said two generators is a vibratory-type ion vapor generator;

(d) at least one of said two generators is a bubbling-type ion vapor generator; and

(e) said apparatus further comprises means (100, 11A, 11B) for selectively activating and de-activating said at least one generator for predetermined active and inactive periods, respectively, sufficient to prevent said liquid from being depleted of ability to produce said ion vapor.

10. In a method for producing a quantity of negatively charged ion vapor, using a generator containing a water-including liquid, the improvement characterized by connecting at least two ion vapor generators together such that ion vapor generated by one of said at least two generators is supplied to a head-space region of the other of said at least two generators.

11. In a method according to claim 10, the improvement further characterized by one or more of the following steps:

(a) withdrawing at least a portion of ion vapor generated by said other generator to a desired location; and

(b) the improvement further comprises selectively activating and de-activating said at least one generator for predetermined active and inactive periods, respectively, sufficient to prevent said liquid from being depleted of ability to produce said ion vapor.

Fig. 1

Fig. 2

Fig. 3

Fig. 4

EP 0 678 663 A1

FIG. 5

FIG. 6

FIG. 7

32

17A

120A

14A

17B

120B

14B

100

FIG 9

OUTPUT

TIME → Fig. 8

OUTPUT

85%

GENERATOR A     GENERATOR B     GENERATOR A

TIME →

Fig. 10

European Patent
Office

EUROPEAN SEARCH REPORT

Application Number

EP 94 30 0091

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | US-A-4 952 340 (WENTWORTH)<br>* column 1, line 5 - line 17 *<br>* column 1, line 55 - column 2, line 6 *<br>* column 3, line 20 - column 4, line 60 *<br>* claims; figures *<br>--- | 1,3 | F02M25/032<br>F02M25/022 |
| A | US-A-4 257 989 (TDK ELECTRONICS CO LTD)<br>* column 6, line 38 - line 49 *<br>* figure 13 *<br>--- | 1 | |
| A | US-A-3 107 657 (COOK)<br>----- | | |
| | | | TECHNICAL FIELDS SEARCHED (Int.Cl.6) |
| | | | F02M<br>B05B |

The present search report has been drawn up for all claims

| Place of search | Date of completion of the search | Examiner |
|---|---|---|
| THE HAGUE | 29 August 1995 | Klinger, T |

EPO FORM 1503 03.82 (P04C01)